# FASCICULE DE BREVET EUROPEEN

(11) **EP 3 183 103 B1**
(45) Date de publication et mention de la délivrance du brevet: **12.09.2018**
(21) Numéro de dépôt: 15759910.1
(22) Date de dépôt: 19.08.2015
(51) Int. Cl.: B29C 33/30, B29L 31/30

(54) **MAÎTRE MODÈLE DE FORME COMPLEXE, KIT DE RÉALISATION**
MASTERMODELL MIT KOMPLEXER FORM UND KIT ZUR HERSTELLUNG DAVON
MASTER MODEL HAVING A COMPLEX SHAPE, AND KIT FOR PRODUCING SAME

(30) Priorité: 21.08.2014 FR 1457918
(43) Date de publication de la demande: 28.06.2017
(73) Titulaire: IXBLUE, 78100 Saint-Germain-en-Laye (FR)
(72) Inventeur: GRALL, Sébastien, F-13400 Aubagne (FR)
(74) Mandataire: Jacobacci Coralis Harle
(86) Numéro de dépôt international: PCT/FR2015/052228
(87) Numéro de publication internationale: WO 2016/027035

(56) Documents cités:
- WO-A1-2013/102463
- WO-A1-2013/120583
- FR-A1- 2 598 648
- US-A1- 2005 006 823
- US-B1- 6 759 002
- F. C. Campbell: "Cure tooling : you can pay me now... or pay me later" In: "Cure tooling : you can pay me now... or pay me later", 1 janvier 2004 (2004-01-01), Elsevier, XP055174159, ISBN: 978-1-85-617415-2 pages 103-130, figure 22

## Description

La présente invention a pour objet un maître modèle de forme complexe, par exemple pour le moulage d'une coque de navire ou de bateau. Un kit complète l'invention.

Les maîtres modèles sont destinés à former des surfaces de forme complexe sur lesquelles on va pouvoir réaliser un objet dont la surface extérieure prendra cette forme complexe. Ils sont utilisés dans le domaine de la construction des coques de navire et sont en général fabriqués pour des séries limitées et ensuite détruits. En outre, leur mode de fabrication fait qu'ils ne sont pas déplaçables simplement si leur taille est importante du fait qu'ils sont généralement d'une pièce ou indémontables.

On connait plusieurs modes de mise en oeuvre de maîtres modèles avec sur des couples transversaux des fentes de réception de longerons comme décrit dans les documents suivants : "Cure tooling : you can pay me now... or pay me later" de F.C. Campbell, Elsevier, XP055174159, ISBN: 978-1-85-617415-2, pages 103-130, ou encore WO 2013/120583 A1, FR 2 598 648 A1 et US 6 759 002 B1.

Il est ici proposé un maître modèle constitué d'éléments pouvant être assemblés facilement pour donner une structure rigide et résistante et pouvant être désassemblés tout aussi facilement pour être déplacé ou stocké avant un éventuel réassemblage ultérieur. En outre, au moins une partie des éléments constituant le maître modèle peut être réutilisée pour la réalisation d'un nouveau maître modèle de forme différente, notamment au moins les longerons comme on le verra.

L'invention concerne donc un maître modèle définissant une surface utile de forme complexe, notamment pour le moulage de coques de bateaux ou navires, comportant : un ensemble de couples juxtaposés, chaque couple comportant un panneau ayant au moins un bord utile agencé pour former une section correspondante de ladite surface utile, les couples étant disposés parallèlement entre eux et maintenus solidaires les uns des autres avec des espacements prédéterminés et de telle sorte que leurs bords utiles forment la surface utile souhaitée.

Selon l'invention, le panneau de chaque couple comporte au moins une fente formant une lumière traversante dans l'épaisseur et non débouchante, et les couples sont solidarisés par au moins un longeron qui est adapté à être enfilé selon sa longueur à travers les fentes des couples et qui comporte des encoches transversales d'accueil et de maintien des couples, chaque encoche étant agencée pour accueillir, après que le longeron a été enfilé et à la faveur d'une translation relative transversale du longeron par rapport aux couples, la partie concernée du panneau de chaque couple.

Dans divers modes de mise en oeuvre de l'invention, les moyens suivants pouvant être utilisés seuls ou selon toutes les combinaisons techniquement possibles, sont employés :
- la largeur de chaque encoche est sensiblement égale à l'épaisseur du couple correspondant au moins dans la zone concernée du couple afin que le jeu soit minimum entre le couple concerné et le longeron,
- le longeron est un élément plat étendu en longueur,
- le longeron est un élément plat droit étendu en longueur,
- le longeron est un élément plat courbe étendu en longueur,
- le longeron possède deux bords de longueur opposés et comporte des encoches transversales seulement le long d'un de ces deux bords de longueur,
- le longeron possède deux bords de longueur opposés et comporte des encoches transversales le long de ces deux bords de longueur,
- les longerons enfilés et translatés sont dans des plans parallèles entre eux,
- les longerons enfilés et translatés sont dans des plans non-parallèles entre eux,
- certains des longerons enfilés et translatés sont dans des plans parallèles entre eux,
- les fentes sont verticales,
- les fentes sont inclinées par rapport à la verticale,
- les fentes, en dehors des deux fentes d'une paire, d'un couple donné ne sont pas parallèles entre elles,
- certaines des fentes, notamment les deux fentes d'une paire, d'un couple donné sont parallèles entre elles,
- chaque couple comporte au moins deux fentes et les couples sont assemblés par au moins deux longerons de forme plate et enfilés chacun dans une fente associée de chaque couple, de telle sorte que la plus grande dimension de la section transversale d'un longeron s'étende suivant une direction sensiblement non parallèle à celle d'un autre longeron,
- la forme et l'épaisseur du longeron sont pratiquement égales à celles des fentes dans lesquelles il est enfilé afin qu'une fois le longeron enfilé et ensuite translaté transversalement pour insertion des couples dans les encoches, le jeu soit minimum entre les couples et le longeron,
- une fois le longeron enfilé et ensuite translaté transversalement pour insertion des couples dans les encoches, une partie des fentes dans lesquelles le longeron est installé se retrouve libérée,
- la fente est de largeur constante sur toute sa hauteur,
- la fente présente sur sa hauteur au moins deux parties de largeurs différentes,
- la partie libérée de la fente est plus large que la partie non libérée,
- dans les couples, au moins certaines des fentes sont réalisées par paires, les deux fentes d'une paire étant parallèles entre elles et voisines l'une de l'autre,
- les deux fentes d'une paire de fentes sont disposées sensiblement à la même hauteur à travers un couple,
- les couples sont disposés sur un support, le support comportant des moyens de positionnement et de maintien des couples avant mise en place du longeron,
- ledit au moins un longeron est formé d'une série de longerons unitaires ayant chacun une longueur unitaire inférieure à la longueur du maître modèle et disposés en séries décalées transversalement sur ladite longueur du maître modèle et avec des chevauchements de leurs extrémités adjacentes à travers au moins deux couples adjacents,
- des longerons unitaires sont étendus entre seulement deux couples adjacents,
- des longerons unitaires sont étendus entre au moins trois couples adjacents,
- des longerons unitaires sont étendus entre au moins quatre couples adjacents,
- des longerons unitaires sont étendus entre au moins cinq couples adjacents,
- une lame de blocage est introduite dans une partie libérée d'au moins une des fentes pour former un clavetage, la largeur de ladite lame de blocage étant sensiblement égale à la longueur/hauteur de la partie libérée de la fente une fois le longeron translaté transversalement afin de bloquer dans la fente le longeron translaté,
- la lame de blocage est de longueur sensiblement égale à celle du longeron correspondant,
- les couples et les longerons sont réalisés dans des plaques en tout matériau en panneau facilement usinable et qui est rigide,
- les couples et les longerons sont réalisés dans des plaques métalliques rigides,
- les couples et les longerons sont réalisés dans des plaques de bois ou de dérivés de bois.

L'invention concerne également un kit de réalisation d'un maître modèle comportant au moins des couples à fentes et des longerons à encoches permettant la réalisation du maître modèle de l'invention par enfilage des longerons dans les fentes puis translation des encoches des longerons sur les couples.

La présente invention, sans qu'elle en soit pour autant limitée, va maintenant être exemplifiée avec la description qui suit de modes de réalisation et de mise en oeuvre en relation avec :
la Figure 1 qui représente une vue de dessus et perspective d'un maître modèle,
la Figure 2 qui représente une vue de côté d'un longeron à encoches transversales,
la Figure 3 qui représente une vue partielle d'un maître modèle montrant les relations entre deux couples à paires de fentes et un longeron,
la Figure 4 qui représente une vue en perspective d'un maître modèle en cours de construction montrant l'installation d'un longeron à travers des couples dans une première phase dans laquelle le longeron est enfilé selon sa longueur à travers des fentes des couples,
la Figure 5 qui représente une vue en perspective d'un maître modèle en cours de construction montrant l'installation d'un longeron à travers des couples dans une seconde phase dans laquelle le longeron est amené à translater transversalement,
la Figure 6 qui représente une vue en perspective d'un maître modèle en cours de construction montrant l'installation de deux longerons à travers une série en alignement de paires de fentes et avec chevauchement des extrémités des deux longerons, le deuxième longerons devant être enfilé, et
la Figure 7 qui représente une vue en perspective d'un maître modèle en cours de construction montrant le résultat de l'installation de deux longerons à travers une série en alignement de paires de fentes et avec chevauchement des extrémités des deux longerons.

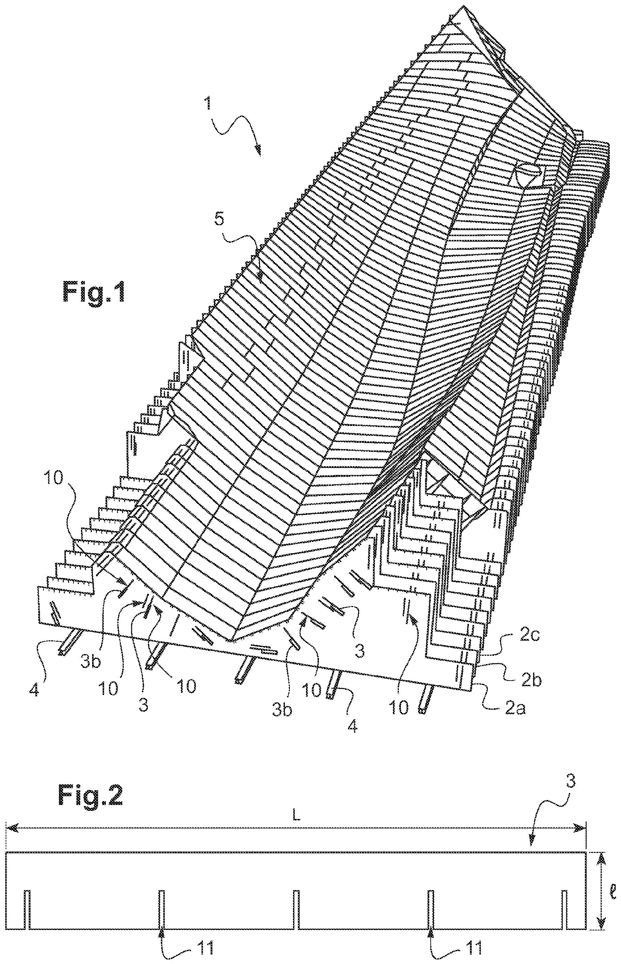

Comme on l'a vu, l'invention permet de réaliser un moule ou maître modèle 1 ayant une surface de moulage de forme complexe, en particulier pour le moulage de coques de bateaux ou navires de surface ou de profondeur, en mettant en oeuvre un ensemble de couples. Un exemple d'un tel moule ou maître modèle est donné sur la Figure 1. La longueur d'un tel maître modèle peut être de quelques mètres à plusieurs dizaines de mètres, avec une largeur de plusieurs mètres, et avec des couples espacés de 50 cm à quelques mètres entre eux.

Chaque couple 2a, 2b, 2c... est un panneau plan, plein, étendu et comportant au moins un bord inférieur 9 et un bord supérieur 8. Le bord supérieur 8 du couple est destiné à réaliser la forme complexe du maître modèle et il est donc découpé selon une section de la surface utile de ce maître modèle. Pour réaliser le maître modèle, on pose sur un support, par leurs bords inférieurs 9, parallèlement entre eux, les couples 2a, 2b, 2c... verticalement et on les maintiens ensembles par au moins des longerons 3 à encoches 11. Des éléments de surface 5 sont finalement installés entre les bords supérieurs 8 des couples 2a, 2b, 2c... afin de former la surface complexe du moule ou maître modèle 1.

Les couples sont installés sur un support qui comporte des moyens de positionnement et de maintien propre des couples. Les moyens de positionnement et de maintien du support sont, par exemple, des encoches, soit du bord inférieur des couples, soit du support, soit des deux et dans ce dernier cas lesdites encoches sont de préférence complémentaires pour s'emboîter les unes dans les autres par paires. Les moyens de positionnement et de maintien du support peuvent également comporter des moyens de serrage à mâchoires pouvant prendre en prise les couples, lesdits moyens de serrage étant de préférence réglables en position. Sur les Figures, afin de les simplifier, les supports sont schématisés par des poutres 4.

En général, les couples 2a, 2b, 2c... sont disposés transversalement par rapport à la longueur du maître modèle 1. Ces couples sont de préférence des panneaux qui présentent une bonne rigidité et qui sont facilement usinables. Si les panneaux sont de préférence en bois ou à base de bois, ils peuvent être, dans des variantes, métalliques en partie ou totalité. Il peut en être de même pour les longerons.

Les couples 2a, 2b, 2c... comportent des fentes 10 droites/linéaires allongées de longueur et de largeur déterminées et qui forment des alignements entre les couples adjacents successifs sur la longueur du maître modèle ou une partie de cette longueur et dans lesquels alignements de fentes 10 on vient enfiler les longerons 3, 3a, 3b... en forme de plaques allongées. Les fentes des couples 10 sont en plein et ne s'ouvrent donc pas sur un bord 8, 9 de couple 2a, 2b, 2c...

En pratique, étant donné la longueur du maître modèle 1, ces alignements de fentes 10 sont réalisés sur un sous ensemble des fentes et donc de couples 2a, 2b, 2c... adjacents successifs correspondants. Ainsi, les fentes 10 sont regroupées par sous-ensembles de fentes de couples adjacents dans le maître modèle, un sous ensemble de fentes de couples adjacents ayant ses fentes alignées le long d'un plan de fentes 10 perpendiculaire aux couples 2a, 2b, 2c... de manière à pouvoir introduire dans lesdites fentes du sous ensemble, en traversant les couples correspondants, le longeron 3 qui est de longueur et largeur (=hauteur) déterminées.

Dans le cas d'un maître modèle 1 de longueur relativement réduite, on peut mettre en oeuvre des longerons 3 ayant la longueur du maître modèle et donc tous les couples sont traversés par les longerons. Ainsi, les longerons peuvent être de la longueur du maître modèle ou être de longueurs inférieures à la longueur du maître modèle et on peut alors, si on le souhaite, les désigner « longerons unitaires ». De préférence, dans le cas où les longerons ont des longueurs inférieures à la longueur du maître modèle, on dispose les longerons en série et de manière à ce qu'il y ait chevauchement de longerons voisins/adjacents aux extrémités correspondantes des longerons 3 sur au moins deux couples adjacents.

La longueur, hauteur en l'espèce, des fentes 10 est supérieure ou pratiquement égale à la largeur ou hauteur I du longeron 3 et, de préférence, l'épaisseur du longeron est pratiquement égale la largeur de la fente afin de permettre à la fois d'enfiler le longeron dans les fentes à travers les couples et d'obtenir un jeu minimum entre les couples et le longeron 3 au moins au niveau des fentes 10. Dans une variante, la largeur des fentes 10 est supérieure à l'épaisseur du longeron afin de faciliter l'action d'enfiler le longeron 3 à travers les couples 2a, 2b, 2c... Si, de préférence, les fentes 10 sont des ouvertures rectangulaires à travers les couples 2a, 2b, 2c..., dans des variantes elles peuvent avoir des formes triangulaires tronquées.

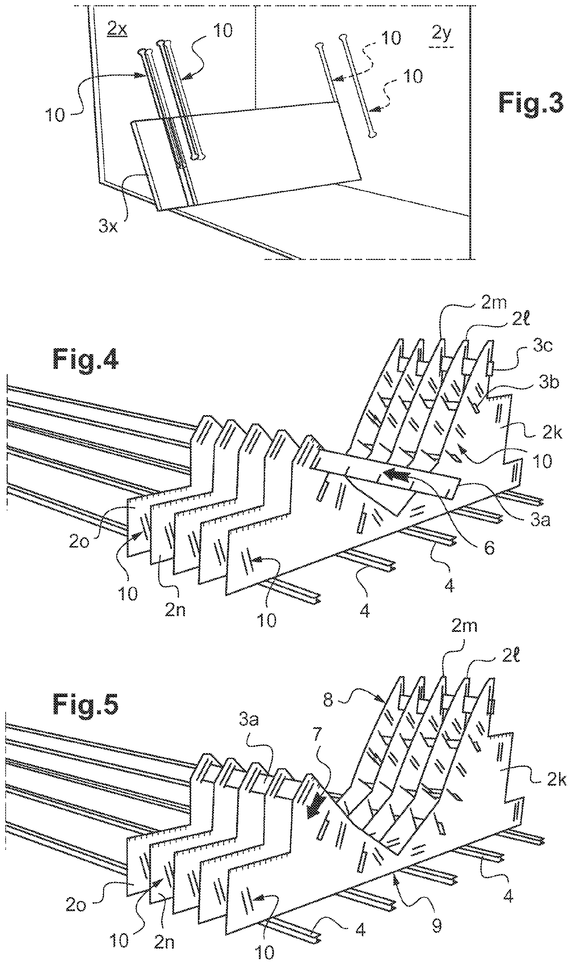

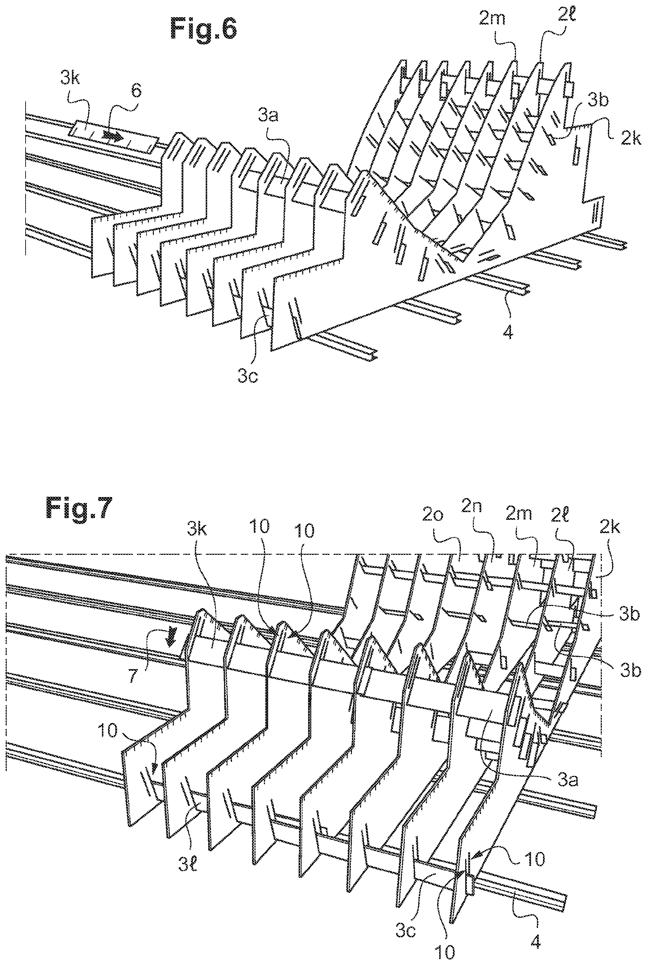

Le longeron 3 allongé comporte, le long d'un de ses deux bords de longueur L, des encoches 11 perpendiculaires au dit bord. Ces encoches sont réalisées de manière à ce que, une fois le longeron introduit et enfilé selon sa longueur à travers le sous ensemble de fentes de couples adjacents, le longeron 3 puisse glisser/translater, transversalement, selon sa largeur/hauteur le long des fentes afin de libérer une partie desdites fentes du sous ensemble et ainsi de permettre le maintien des couples. Lors de ce glissement/translation schématisé par la flèche épaissie 7 sur la Figure 5, le longeron se déplace dans une direction portée par des plans parallèles aux couples et, donc, perpendiculairement à la direction que le longeron 3 avait suivie lors de son introduction préalable par enfilage à travers les différentes fentes 10 et qui est schématisée par la flèche épaissie 6 sur la Figure 4. La mise en place et la solidarisation des couples se poursuivent comme représenté sur les Figures 6 et 7 avec enfilage 6 du longeron 3k puis translation 7 dudit longeron 3k. On comprend que le démontage du maître couple s'effectuera par les opérations inverses : d'abord translation inverse puis contre-enfilage ou poursuite de l'enfilage selon le côté des couples où l'on souhaite retirer le longeron, respectivement du côté où l'on avait commencé l'enfilage ou du côté opposé. Les longerons, qui ont des encoches, s'apparentent à des peignes et sont donc introduits dans les fentes des couples.

La largeur de l'encoche 11 est sensiblement égale à l'épaisseur du couple dans sa partie correspondante de glissement/translation afin qu'une fois le longeron enfilé et ensuite translaté, le jeu soit minimum entre les couples et le longeron au moins au niveau des encoches.

Afin d'améliorer la stabilité du montage, chacun des panneaux des couples peut comporter des guides, d'une part, le long des deux bords de longueur de la fente considérée, et/ou, d'autre part, en continuité de la fente sur le panneau du couple le long des deux axes de ces deux bords de longueur de fente. On comprend que dans ce dernier cas, les guides sont du côté de l'extrémité de la fente vers lequel on effectue la translation transversale du longeron. Ces guides peuvent être d'un seul côté/face du couple ou des deux côtés/face. Ces guides sont par exemple réalisés avec une cornière en L, donc à deux ailes perpendiculaires entre elles. Sur une des deux ailes viendra prendre appui la surface du longeron et l'autre aile étant fixée/solidaire de la surface du panneau du couple. Dans une variante les guides ne sont présents que le long des bords de la fente et résultent d'une déformation du métal par repoussage ayant aboutie à l'ouverture de la fente.

De préférence, les encoches 11 sont réalisées le long d'un seul des deux bords de longueur L du longeron 3. Mais, dans une variante, on peut réaliser des longerons à encoches comportant des encoches le long des deux bords de longueur du longeron, les espacements entre les encoches étant identiques, possiblement décalés, entre les deux bords afin de pouvoir utiliser le longeron d'un côté ou de l'autre et/ou translater d'un côté ou de l'autre des fentes. Dans une variante de ce dernier cas, les espacements entre les encoches sont différents entre les deux bords de longueur du longeron afin de pouvoir utiliser un même longeron à encoches pour deux arrangements différents des couples correspondants en retournant le longeron. Si, de préférence, le longeron 3 à encoches 11 comporte un nombre d'encoches égal au nombre de couples qu'il maintien sur sa longueur, dans une variante, le longeron à encoches comporte un nombre d'encoches supérieur au nombre de couples qu'il maintien sur sa longueur L.

Les couples 2a, 2b, 2c... étant des panneaux d'une largeur relativement importante, plusieurs mètres en général, il est préférable de répartir plusieurs longerons sur la largeur des couples. Ainsi, un couple donné comporte au moins deux fentes 10, chacune des fentes dudit couple appartenant à un sous ensemble distinct de fentes de couples adjacents et pour lequel sous ensemble, un longeron est prévu. Il résulte de cette structure que dans le cas de plus d'une fente par couple, chacune des fentes du couple appartient à un sous ensemble distinct de fentes de couples adjacents recevant son longeron propre. De préférence, dans un couple donné, les fentes sont réparties sensiblement régulièrement sur la surface du couple et sur la largeur du couple. Par exemple, on peut prévoir une fente vers chaque extrémité de largeur (latéralement) du couple et une ou plusieurs autres fentes entre les deux d'extrémités/latérales.

Toujours afin d'améliorer la stabilité du montage, on fait en sorte que les fentes d'un couple donné soient dans des plans de fentes non parallèles entre eux et donc que les plans portés par les longerons enfilés et translatés ne soient pas parallèles entre eux, et, de préférence, ces plans ont la même direction qui correspond à la longueur du maître modèle et ils sont donc perpendiculaires aux couples.

Jusqu'à présent, comme représenté sur les Figures, et afin de faciliter les explications, on a considéré une structure de maître modèle dont les couples sont verticaux et perpendiculaires à la longueur du maître modèle et des longerons parallèles à cette longueur de maître modèle et donc perpendiculaires aux couples. On comprend que dans le cas où le maître modèle est réalisé avec des couples parallèles entre eux mais qui ne sont plus verticaux mais inclinés, les encoches ne sont alors plus perpendiculaires au bord de longueur du longeron mais inclinées comme les couples. D'autres dispositions des couples entre eux sont possibles et, par exemple non parallèles entre eux, par exemple radiaux dans le cas où le maître modèle doit former un élément allongé courbe, et dans de tels cas, les orientations des encoches et les espacements entre encoches seront adaptées. On peut même prévoir des longerons courbes dans le cas d'une disposition radiale ou en étoile des couples. Le plan d'alignement des fentes d'un sous ensemble de fentes peut être non perpendiculaire aux couples. Dans d'autres variantes, le longeron au lieu d'être plan peut être contourné.

Dans le mode de réalisation représenté, chaque fente est réalisée par paire et les deux fentes d'une paire sont parallèles entre elles et voisines l'une de l'autre. Cette disposition par paires de fentes 10 est mieux visible sur la Figure 3 où le couple d'avant plan 2x a été rendu transparent et on peut voir le couple d'arrière-plan 2y (souligné en pointillés pour signifier qu'il est vu en transparence). Les deux fentes 10 du couple d'arrière-plan 2y (repérés par des flèches en pointillés pour signifier qu'elles sont vues en transparence) sont alignées avec celles du couple d'avant plan 2x. Un longeron 3x a été enfilé puis translaté dans une des deux fentes de chaque paire et à travers les deux couples 2x, 2y, les deux fentes concernées étant alignées pour que le longeron qui est ici une plaque droite puisse passer.

Ce mode de réalisation de fentes par paires est particulièrement intéressant dans le cas où les longerons ont une longueur inférieure à la longueur du maître modèle et qu'ils doivent être mis en série avec chevauchement de leurs extrémités correspondantes à travers au moins un, de préférence deux (voire plus) couples adjacents. En effet, ce chevauchement nécessite un décalage latéral d'un premier longeron au suivant le long de la mise en série car une fente donnée ne peut recevoir qu'un longeron. Ainsi, le premier longeron se termine dans la première fente de la paire de fentes et le longeron suivant commence, au chevauchement entre deux couples prés, dans la seconde fente de ladite paire de fentes avec un décalage latéral réduit d'un longeron au suivant et tout en restant dans des plans parallèles entre eux, les deux fentes de la paire étant proches et parallèles. Un tel chevauchement est visible au premier plan sur la Figure 7 où les deux couples 2n et 2o reçoivent les extrémités de deux longerons 3c et 3l dans deux fentes 10 parallèles voisines d'une paire de fentes. Il en est de même en deuxième plan où les deux couples 2n et 2o reçoivent les extrémités de deux longerons 3a et 3k dans deux fentes 10 parallèles voisines d'une paire de fentes. Plus en arrière, des longerons courts 3b étendus entre seulement deux couples adjacents sont mis en oeuvre.

Dans une variante, au lieu de paires de fentes, on réalise des fentes de chevauchement spécifiques de largeur supérieure, pratiquement deux fois l'épaisseur d'un longeron, et dans lesquelles deux extrémités de longerons peuvent être enfilées et translatées et on comprend alors que les alignements successifs de sous-ensembles de fentes doivent être décalés d'une épaisseur de longeron entre elles.

Afin de verrouiller la structure, on prévoit une lame de blocage qui est introduite dans la partie libérée d'au moins une des fentes ayant reçu un longeron, la largeur de la lame de blocage étant sensiblement égale à la longueur de la partie libérée de la fente suite à la translation du longeron afin de bloquer dans la fente le longeron enfilé et translaté. Cette lame de blocage peut être de forme triangulaire pour former un coin qui sera plus facile à enfiler dans la fente. On peut prévoir une lame de blocage par fente ou moins ou, encore, une lame de blocage qui est de longueur sensiblement égale à celle du longeron correspondant. Ainsi, la lame de blocage forme un clavetage.

Dans d'autres variantes de réalisation on met en oeuvre, en outre, des longerons secondaires avec des encoches et ces longerons secondaires sont enfilés selon leurs longueurs dans les fentes après que les longerons initiaux aient été enfilés et translatés. On comprend que la largeur ou hauteur du longeron secondaire doit être inférieure ou égale à la longueur de la partie libérée de la fente suite à la translation du longeron initial. De même, les encoches du longeron secondaire doivent être orientées de manière opposée à celles des encoches du longeron initial car lesdites encoches du longeron secondaire sont destinées à venir en regard des couples correspondants du côté opposé au longeron initial de la fente. Le longeron secondaire est également translaté selon sa largeur le long de la fente mais dans un sens opposé à la translation qu'avait effectuée le longeron initial. Afin de verrouiller l'ensemble, une lame de bocage est ensuite introduite dans au moins une des fentes entre le longeron initial et le longeron secondaire afin de bloquer ces deux longerons glissés vers les deux côtés opposés de de la fente.

Les couples 2a, 2b, 2c..., en dehors de la forme spécifique de leurs bords supérieurs 8, sont relativement simples à fabriquer en ce qui concerne les fentes 10 car elles sont identiques/superposables pour un certain nombre de couples, voire tous les couples notamment lorsque les fentes sont réalisées par paires.

Bien entendu la présente invention n'est pas limitée aux modes de réalisation particuliers qui viennent d'être décrits, mais s'étend à toutes variantes et équivalents conformes à son esprit. Ainsi, on comprend bien que l'invention peut être déclinée selon de nombreuses autres possibilités sans pour autant sortir du cadre défini par la description et les revendications. Par exemple, si on a considéré que les couples et les longerons à encoches sont réalisés dans des plaques planes tout comme les éventuelles lames de blocage, on envisage la mise en oeuvre d'autres formes ou matériaux. Ainsi, les longerons peuvent être des profilés en T ou en L et dans ce cas la largeur et/ou la forme de la fente seront adaptées en conséquence. De même, on peut prévoir des moyens de fixation amovibles entre les couples et les longerons, par exemple sous forme de broches, de goupilles ou de vis/boulons. Si, de préférence, le maître modèle est démontable et remontable, on peut, en variante, mettre en oeuvre des moyens de fixation définitifs entre les couples et les longerons, lesdits moyens de fixation définitifs étant typiquement des collages, soudures ou des brasages. Enfin, le maître couple 1 qui permet de réaliser des moulages de pièces de grandes dimensions, n'est pas limité aux applications maritimes mais peut s'appliquer à d'autres domaines comme par exemple le moulage d'une aile d'avion en aéronautique.

## Revendications

1. Maître modèle (1) définissant une surface utile de forme complexe, notamment pour le moulage de coques de bateaux ou navires, comportant :
- un ensemble de couples (2a, 2b, 2c...) juxtaposés, chaque couple (2a, 2b, 2c...) comportant un panneau ayant au moins un bord utile (8) agencé pour former une section correspondante de ladite surface utile, les couples (2a, 2b, 2c...) étant disposés parallèlement entre eux et maintenus solidaires les uns des autres avec des espacements prédéterminés et de telle sorte que leurs bords utiles (8) forment la surface utile souhaitée,
**caractérisé en ce que** le panneau de chaque couple (2a, 2b, 2c...) comporte au moins une fente (10) formant une lumière traversante dans l'épaisseur et non débouchante, et
**en ce que** les couples (2a, 2b, 2c...) sont solidarisés par au moins un longeron (3, 3a, 3b...) qui est adapté à être enfilé (6) selon sa longueur (L) à travers les fentes (10) des couples et qui comporte des encoches (11) transversales d'accueil et de maintien des couples (2a, 2b, 2c...), chaque encoche (11) étant agencée pour accueillir, après que le longeron a été enfilé et à la faveur d'une translation (7) relative transversale du longeron par rapport aux couples, la partie concernée du panneau de chaque couple (2a, 2b, 2c...).

2. Maître modèle selon la revendication 1, **caractérisé en ce que** la largeur de chaque encoche est sensiblement égale à l'épaisseur du couple (2a, 2b, 2c...) correspondant au moins dans la zone concernée du couple afin que le jeu soit minimum entre le couple concerné et le longeron.

3. Maître modèle selon la revendication 2, **caractérisé en ce que** la forme et l'épaisseur du longeron (3, 3a, 3b...) sont pratiquement égales à celles des fentes (10) dans lesquelles il est enfilé afin qu'une fois le longeron enfilé et ensuite translaté transversalement pour insertion des couples (2a, 2b, 2c...) dans les encoches (11), le jeu soit minimum entre les couples et le longeron.

4. Maître modèle selon l'une quelconque des revendications précédentes, **caractérisé en ce que** le longeron (3, 3a, 3b...) possède deux bords de longueur (L) opposés et comporte des encoches (11) transversales le long de ces deux bords de longueur.

5. Maître modèle selon l'une quelconque des revendications précédentes, **caractérisé en ce que** chaque couple (2a, 2b, 2c...) comporte au moins deux fentes et **en ce que** les couples (2a, 2b, 2c...) sont assemblés par au moins deux longerons (3, 3a, 3b...) de forme plate et enfilés chacun dans une fente associée de chaque couple (2a, 2b, 2c...), de telle sorte que la plus grande dimension de la section transversale d'un longeron s'étende suivant une direction sensiblement non parallèle à celle d'un autre longeron.

6. Maître modèle selon l'une quelconque des revendications précédentes, **caractérisé en ce que** dans les couples (2a, 2b, 2c...), au moins certaines des fentes (10) sont réalisées par paires, les deux fentes d'une paire étant parallèles entre elles et voisines l'une de l'autre.

7. Maître modèle selon l'une quelconque des revendications précédentes, **caractérisé en ce que** les couples (2a, 2b, 2c...) sont disposés sur un support (4), le support comportant des moyens de positionnement et de maintien des couples avant mise en place du longeron (3, 3a, 3b...).

8. Maître modèle selon l'une quelconque des revendications précédentes, **caractérisé en ce que** ledit au moins un longeron est formé d'une série de longerons unitaires (3, 3a, 3b...) ayant chacun une longueur unitaire inférieure à la longueur du maître modèle et disposés en séries décalées transversalement sur ladite longueur du maître modèle (1) et avec des chevauchements de leurs extrémités adjacentes à travers au moins deux couples (2a, 2b, 2c...) adjacents.

9. Maître modèle selon l'une quelconque des revendications précédentes, **caractérisé en ce qu'**une lame de blocage est introduite dans une partie libérée d'au moins une des fentes (10) pour former un clavetage, la largeur de ladite lame de blocage étant sensiblement égale à la longueur de la partie libérée de la fente une fois le longeron (3, 3a, 3b...) translaté transversalement afin de bloquer dans la fente (10) le longeron translaté.

10. Maître modèle selon la revendication 9, **caractérisé en ce que** la lame de blocage est de longueur sensiblement égale à celle du longeron correspondant.

11. Kit de réalisation d'un maître modèle comportant au moins des couples (2a, 2b, 2c...) à fentes (10) et des longerons (3, 3a, 3b...) à encoches (11) permettant la réalisation du maître modèle de l'une quelconque des revendications précédentes par enfilage (6) des longerons dans les fentes puis translation (7) des encoches des longerons sur les couples.

## Patentansprüche

1. Mastermodell (1) mit einer Nutzfläche komplexer Form, insbesondere zum Formen von Boots- oder Schiffskörpern, das eine Gesamtheit von nebeneinander angeordneten Paaren (2a, 2b, 2c ...) aufweist, wobei jedes Paar (2a, 2b, 2c ...) eine Platte mit wenigstens einem Nutzrand (8) aufweist, um einen entsprechenden Querschnitt der Nutzfläche zu bilden, wobei die Paare (2a, 2b, 2c ...) zueinander parallel angeordnet und mit vorbestimmten Zwischenräumen so zusammengehalten werden, daß deren Nutzränder (8) die gewünschte Nutzfläche bilden,
**dadurch gekennzeichnet, daß** die Platte jedes Paars (2a, 2b, 2c ...) wenigstens einen Schlitz (10) aufweist, der eine in der Dicke durchgehende und nicht mündende Öffnung bildet, und
daß die Paare (2a, 2b, 2c ...) durch wenigstens einen Längsträger (3, 3a, 3b ...) zusammengehalten werden, der dazu ausgelegt ist, der Länge (L) nach durch die Schlitze (10) der Paare hindurch eingezogen (6) zu werden, und der quer verlaufende Aussparungen (11) zum Aufnehmen und Festhalten der Paare (2a, 2b, 2c ...) aufweist, wobei jede Aussparung (11) dazu ausgelegt ist, nachdem der Längsträger eingezogen worden ist und aufgrund der relativen Querverlagerung (7) des Längsträgers gegenüber den Paaren, den entsprechenden Teil der Platte jedes Paars (2a, 2b, 2c ...) aufzunehmen.

2. Mastermodell gemäß Anspruch 1, **dadurch gekennzeichnet, daß** die Breite jeder Aussparung wenigstens im betreffenden Bereich des Paars im Wesentlichen gleich der Dicke des entsprechenden Paars (2a, 2b, 2c ...) ist, damit das Spiel zwischen dem betreffenden Paar und dem Längsträger minimal ist.

3. Mastermodell gemäß Anspruch 2, **dadurch gekennzeichnet, daß** die Form und die Dicke des Längsträgers (3, 3a, 3b ...) praktisch gleich jener der Schlitze (10) ist, in die dieser eingezogen wird, damit dann, wenn der Längsträger eingezogen und dann quer verlagert worden ist, um die Paare (2a, 2b, 2c ...) in die Aussparungen (11) einzufügen, das Spiel zwischen dem betreffenden Paar und dem Längsträger minimal ist.

4. Mastermodell gemäß einem der vorangehenden Ansprüche, **dadurch gekennzeichnet, daß** der Längsträger (3, 3a, 3b ...) zwei voneinander abgewandte Längsränder (L) hat und entlang dieser beiden Längsränder quer verlaufende Aussparungen (11) aufweist.

5. Mastermodell gemäß einem der vorangehenden Ansprüche, **dadurch gekennzeichnet, daß** jedes Paar (2a, 2b, 2c ...) wenigstens zwei Schlitze aufweist und daß die Paare (2a, 2b, 2c ...) mittels wenigstens zweier Längsträger (3, 3a, 3b ...), die eine flache Form haben und von denen jeder in einen zugehörigen Schlitz jedes Paars (2a, 2b, 2c ...) eingezogen ist, derart zusammengefügt sind, daß sich die größte Abmessung des Querschnitts eines Längsträgers in einer zu der eines anderen Längsträgers im Wesentlichen nicht parallelen Richtung erstreckt.

6. Mastermodell gemäß einem der vorangehenden Ansprüche, **dadurch gekennzeichnet, daß** in den Paaren (2a, 2b, 2c ...) wenigstens einige der Schlitze (10) paarweise ausgeführt sind, wobei die Schlitze eines Paars zueinander parallel und benachbart sind.

7. Mastermodell gemäß einem der vorangehenden Ansprüche, **dadurch gekennzeichnet, daß** die Paare (2a, 2b, 2c ...) auf einer Unterlage (4) angeordnet sind, wobei die Unterlage Mittel zum Positionieren und Festhalten der Paare vor dem Einsetzen des Längsträgers (3, 3a, 3b ...) aufweist.

8. Mastermodell gemäß einem der vorangehenden Ansprüche, **dadurch gekennzeichnet, daß** der wenigstens eine Längsträger aus einer Reihe von einzelnen Längsträgern (3, 3a, 3b ...) gebildet ist, von denen jeder eine Einzellänge aufweist, die kleiner als die Länge des Mastermodells ist, und die in quer zueinander versetzten Reihen über die Länge des Mastermodells (1) und mit Überlappungen der aneinander liegenden Enden durch wenigstens zwei aneinander liegende Paare (2a, 2b, 2c ...) hindurch angeordnet sind.

9. Mastermodell gemäß einem der vorangehenden Ansprüche, **dadurch gekennzeichnet, daß** eine Arretierplatte in einen freigelegten Teil wenigstens eines der Schlitze (10) eingeführt ist, um eine Keilverbindung zu bilden, wobei die Breite der Arretierplatte im Wesentlichen gleich der Länge des freigelegten Teils des Schlitzes ist, wenn der Längsträger (3, 3a, 3b ...) quer verlagert ist, um den verlagerten Längsträger im Schlitz (10) zu blockieren.

10. Mastermodell gemäß Anspruch 9, **dadurch gekennzeichnet, daß** die Arretierplatte im Wesentlichen die gleiche Länge wie jene des entsprechenden Längsträgers aufweist.

11. Kit zur Herstellung eines Mastermodells, das wenigstens Paare (2a, 2b, 2c ...) mit Schlitzen (10) und Längsträger (3, 3a, 3b ...) mit Aussparungen (11) aufweist, die die Herstellung eines Mastermodells gemäß einem der vorangehenden Ansprüche durch Einziehen (6) der Längsträger in die Schlitze und Verlagerung (7) der Aussparungen der Längsträger auf den Paaren ermöglicht.

## Claims

1. A master model (1) defining a useful surface of complex shape, in particular for the moulding of boat or ship shells, including:
- a set of juxtaposed frames (2a, 2b, 2c...), each frame (2a, 2b, 2c...) including a panel having at least one useful edge (8) arranged to form a corresponding section of said useful surface, the frames (2a, 2b, 2c...) being arranged parallel to each other and held rigidly connected to each other with predetermined spacings and such that their useful edges (8) form the desired useful surface,
**characterized in that** the panel of each frame (2a, 2b, 2c...) includes at least one slot (10) forming a blind aperture through the thickness, and
**in that** the frames (2a, 2b, 2c...) are rigidly connected to each other by at least one spar (3, 3a, 3b...) that is adapted to be inserted (6) along its length direction (L) through the slots (10) of the frames and that includes transverse notches (11) for receiving and holding the frames (2a, 2b, 2c...), each notch (11) being arranged to receive, after the spar has been inserted and under the effect of a relative transverse translation (7) of the spar with respect to the frames, the concerned part of the panel of each frame (2a, 2b, 2c...).

2. A master model according to claim 1, **characterized in that** the width of each notch is substantially equal to the thickness of the corresponding frame (2a, 2b, 2c...) at least in the concerned zone of the frame so that the clearance is minimum between the concerned frame and the spar.

3. A master model according to claim 2, **characterized in that** the shape and thickness of the spar (3, 3a, 3b...) are almost equal to those of the slots (10) into which it is inserted in order that, once the spar inserted then transversally translated for insertion of the frames (2a, 2b, 2c...) into the notches (11), the clearance is minimum between the frames and the spar.

4. A master model according to any one of the preceding claims, **characterized in that** the spar (3, 3a, 3b...) has two opposite edges of length (L) and includes transverse notches (11) only along one of these two lengthwise edges.

5. A master model according to any one of the preceding claims, **characterized in that** each frame (2a, 2b, 2c...) includes at least two slots and **in that** the frames (2a, 2b, 2c...) are assembled by at least two flat-shaped spars (3, 3a, 3b...), each inserted into an associated slot of each spar (2a, 2b, 2c...), so that the greatest dimension of the transverse section of a spar extends along a direction substantially not parallel to that of another spar.

6. A master model according to any one of the preceding claims, **characterized in that**, in the frames (2a, 2b, 2c...), at least some of the slots (10) are made by pairs, the two slots of a pair being parallel and close to each other.

7. A master model according to any one of the preceding claims, **characterized in that** the frames (2a, 2b, 2c...) are arranged on a support (4), the support including means for positioning and holding the frames before placement of the spar (3, 3a, 3b...).

8. A master model according to any one of the preceding claims, **characterized in that** said at least one spar is formed of a series of unitary spars (3, 3a, 3b...) each having a unitary length lower than the length of the master model and arranged in series, transversally offset, over said length of the master model (1) and with overlappings of their adjacent ends through at least two adjacent frames (2a, 2b, 2c...).

9. A master model according to any one of the preceding claims, **characterized in that** a locking blade is introduced into a cleared part of at least one of the slots (10) to form a wedging, the width of said locking blade being substantially equal to the length of the cleared part of the slot once the spar (3, 3a, 3b...) transversally translated in order to lock the translated spar in the slot (10).

10. A master model according to claim 9, **characterized in that** the locking blade has a length substantially equal to that of the corresponding spar.

11. Kit for making a master model including at least frames (2a, 2b, 2c...) provided with slots (10) and spars (3, 3a, 3b...) provided with notches (11), allowing the making of the master model according to any one of the preceding claims by insertion (6) of the spars into the slots then translation (7) of the spar notches on the frames.
